# EUROPEAN PATENT SPECIFICATION

(11) **EP 2 670 246 B1**
(45) Date of publication and mention of the grant of the patent: **04.10.2017**
(21) Application number: 12703177.1
(22) Date of filing: 20.01.2012
(51) Int. Cl.: A01N 53/00, A01P 7/04

(54) **PESTICIDAL COMPOSITION AND METHOD FOR CONTROLLING PESTS**
PESTIZIDZUSAMMENSETZUNG UND VERFAHREN ZUR SCHÄDLINGSBEKÄMPFUNG
COMPOSITION PESTICIDE ET PROCÉDÉ POUR LUTTER CONTRE DES NUISIBLES

(30) Priority: 04.02.2011 JP 2011022354
(43) Date of publication of application: 11.12.2013
(73) Proprietor: Sumitomo Chemical Company, Limited, Tokyo 104-8260 (JP)
(72) Inventor: SASAKI, Takashi, Takarazuka-shi Hyogo 665-8555 (JP)
(74) Representative: Vossius & Partner Patentanwälte Rechtsanwälte mbB
(86) International application number: PCT/JP2012/051735
(87) International publication number: WO 2012/105424

(56) References cited:
- WO-A1-2009/074114
- JP-A- 2010 100 762
- US-A1- 2009 326 065

## Description

### Technical Field

The present invention relates to a pesticidal composition and a method for controlling pests.

### Background Art

JP 2000-063329 A discloses that [2,3,5,6-tetrafluoro-4-(methoxymethyl)phenyl]methyl 2,2-dimethyl-3-(1-propenyl)-cyclopropane-carboxylate exhibits an activity in controlling pests.

Furthermore, JP 2000-063329 A discloses a composition comprising the above-mentioned compound.

< US 2009/0326065 A1 concerns an aqueous pesticidal composition consisting of a pyrethroid compound, an alkylbenzene sulfonate, a polyoxyethylene styrenated phenyl ether with a defined HLB, a hydrophilic solvent and water.

JP 2010-100762 A relates to a functional glycol gel containing a glycol based solvent, a gallant, water and a functional component which may pyrethroid insecticide.

9/074114 A1 concerns a water based pesticide composition comprising pesticides, a solvent system including water, water-soluble alcohol and dihydroxy alcohol ether, and a surfactant system comprising alkyl benzene sulfonate, aliphatic alcohol (polyoxyethylene) sulfate, toluene/xylene sulfonic acid salt and a surfactant of formula (I) as defined therein.>

### Summary of Invention

The present invention provides a pesticidal composition and a pest control method which have an excellent activity in controlling pests.

The present inventors have extensively studied to find a pesticidal composition and a pest control method which exhibit an excellent efficacy in controlling pests; and then have found that a pesticidal composition comprising a specific compound, a specific solvent and water (wherein each content thereof is limited to a specific range) exhibits an excellent efficacy in controlling pests. Based upon the new findings, the present invention has been completed.

Namely, the present invention is as follows.
[1] A pesticidal composition comprising an ester compound of Formula (1): 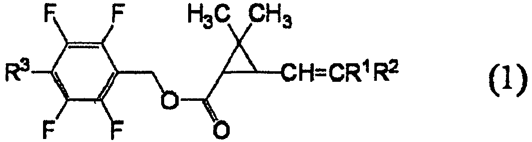 wherein R¹ and R² are each independently selected from the group consisting of hydrogen atom, methyl group, trifluoromethyl group and chlorine atom; and R³ is hydrogen atom, methyl group or methoxymethyl group,
   a glycol ether selected from the group consisting of an ethylene glycol ether of Formula (2):

   R⁴O-[CH₂CH₂O]ₙ-H (2)

   wherein R⁴ is methyl group, isopropyl group, butyl group, isobutyl group, hexyl group, 2-ethylhexyl group, allyl group, phenyl group or benzyl group; and n is an integer of 1 to 10; and a propylene glycol ether,
   and water
   wherein the glycol ether content is from 15 wt% to 40 wt% of the total amount of the composition and the water content is from 20 wt% to 85 wt% of the total amount of the composition.
[2] The pesticidal composition of [1] wherein the glycol ether is an ethylene glycol ether.
[3] The pesticidal composition of [1] wherein the glycol ether is one or two compounds selected from the group consisting of ethylene glycol monobutyl ether and diethylene glycol monobutyl ether.
[4] The pesticidal composition of [1] wherein the glycol ether is at least one compound selected from the group consisting of ethylene glycol monobutyl ether, diethylene glycol monobutyl ether, propylene glycol monomethyl ether, propylene glycol monoethyl ether, and propylene glycol monopropyl ether.
[5] The pesticidal composition of any one of [1] to [4] wherein the ester compound of Formula (1) is at least one compound selected from the group consisting of:
   [2,3,5,6-tetrafluoro-4-(methoxymethyl)phenyl]methyl 2,2-dimethyl-3-(1-propenyl)cyclopropane-carboxylate,
   [2,3,5,6-tetrafluoro-4-methylphenyl]methyl 2,2-dimethyl-3-(1-propenyl)cyclopropane-carboxylate,
   (2,3,5,6-tetrafluorophenyl)methyl 3-(2,2-dichlorovinyl)-2,2-dimethylcyclopropane-carboxylate, and
   [2,3,5,6-tetrafluoro-4-(methoxymethyl)phenyl]methyl 3-(2,2-dichlorovinyl)-2,2-dimethylcyclopropane-carboxylate.
[6] The pesticidal composition of any one of [1] to [4] wherein the ester compound of Formula (1) is at least one compound selected from the group consisting of:
   [2,3,5,6-tetrafluoro-4-(methoxymethyl)phenyl]methyl 2,2-dimethyl-3-(1-propenyl)cyclopropane-carboxylate,
   [2,3,5,6-tetrafluoro-4-methylphenyl]methyl 2,2-dimethyl-3-(1-propenyl)cyclopropane-carboxylate,
   (2,3,5,6-tetrafluorophenyl)methyl 3-(2,2-dichlorovinyl)-2,2-dimethylcyclopropane-carboxylate,
   [2,3,5,6-tetrafluoro-4-(methoxymethyl)phenyl]methyl 3-(2,2-dichlorovinyl)-2,2-dimethylcyclopropane-carboxylate,
   [2,3,5,6-tetrafluoro-4-(methoxymethyl)phenyl]methyl 2,2-dimethyl-3-(2-methyl-1-propenyl)cyclopropanecarboxylate, and
   [2,3,5,6-tetrafluoro-4-(methoxymethyl)phenyl]methyl 3-(3,3,3-trifluoro-1-propenyl)-2,2-dimethylcyclopropanecarboxylate.
[7] The pesticidal composition of any one of [1] to [6] wherein the water content is from 50 wt% to 80 wt% of the total amount of the composition.
[8] The pesticidal composition of any one of [1] to [7] which further comprises a glycol.
[9] The pesticidal composition of [8] wherein the glycol is at least one compound selected from the group consisting of ethylene glycol, diethylene glycol, triethylene glycol, propylene glycol, 1,3-butylene glycol, polyethylene glycol and polypropylene glycol.
[10] The pesticidal composition of [8] wherein the glycol is at least one compound selected from the group consisting of ethylene glycol, diethylene glycol, triethylene glycol, propylene glycol, 1,3-butylene glycol, polyethylene glycol, polypropylene glycol, dipropylene glycol, tripropylene glycol, and tetraethylene glycol.
[11] The pesticidal composition of any one of [8] to [10] wherein the glycol is triethylene glycol.
[12] The pesticidal composition of any one of [8] to [10] wherein the glycol is at least one compound selected from the group consisting of triethylene glycol, propylene glycol and dipropylene glycol.
[13] The pesticidal composition of any one of [8] to [12] wherein the glycol content is from 1 wt% to 45 wt% of the total amount of the composition.
[14] The pesticidal composition of any one of [1] to [13] which is used in the form of a heat transpiratory preparation.
[15] The pesticidal composition of any one of [1] to [13] which is used in the form of a composition for an ultrasonic atomizer.
[16] A non-therapeutic method for controlling pests which comprises applying an effective amount of the pesticidal composition of any one of [1] to [13] to pests or habitats thereof.
[17] The method of [16] which is carried out by dipping a part of a porous liquid-absorbing wick in the pesticidal composition of any one of [1] to [13] to absorb the composition into the wick, and then heating the upper part of the wick to make the absorbed composition vaporize.
[18] The method of [16] which is carried out by spraying the pesticidal composition of any one of [1] to [13] from an ultrasonic atomizer.

The pesticidal composition of the present invention exhibits an excellent efficacy in controlling pests. Furthermore, the method for controlling pests of the present invention can be effective in controlling pests.

### Description of Embodiments

The pesticidal composition of the present invention (hereinafter, referred to as the present composition) comprises an ester compound of Formula (1): 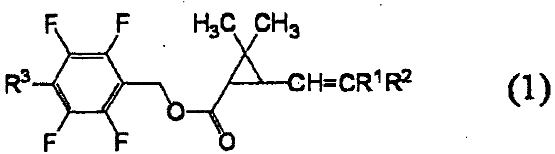 wherein R¹ and R² each independently represent hydrogen atom, methyl group, trifluoromethyl group or chlorine atom, and R³ is hydrogen atom, methyl group or methoxymethyl group (hereinafter, referred to as the present compound), a glycol ether as defined in claim 1, and water wherein the glycol ether content is from 15 wt% to 40 wt% of the total amount of the composition and the water content is from 20 wt% to 85 wt% of the total amount of the composition.

The present composition may be prepared by, for example, mixing the present compound, a glycol ether and water (as well as the below-mentioned glycol and formulation additive if necessary) at room temperature or a heating temperature to obtain a solution.

Specific examples of the present compounds used herein include the following:
[2,3,5,6-tetrafluoro-4-(methoxymethyl)phenyl]methyl 2,2-dimethyl-3-(1-propenyl)cyclopropane-carboxylate (hereinafter, referred to as Compound A),
[2,3,5,6-tetrafluoro-4-methylphenyl]methyl 2,2-dimethyl-3-(1-propenyl)cyclopropane-carboxylate (hereinafter, referred to as Compound B),
(2,3,5,6-tetrafluorophenyl)methyl 3-(2,2-dichlorovinyl)-2,2-dimethylcyclopropane-carboxylate (hereinafter, referred to as Compound C),
[2,3,5,6-tetrafluoro-4-(methoxymethyl)phenyl]methyl 3-(2,2-dichlorovinyl)-2,2-dimethylcyclopropane-carboxylate,
[2,3,5,6-tetrafluoro-4-(methoxymethyl)phenyl]methyl 2,2-dimethyl-3-(2-methyl-1-propenyl)cyclopropanecarboxylate, and
[2,3,5,6-tetrafluoro-4-(methoxymethyl)phenyl]methyl 2,2-dimethyl-3-(3,3,3-trifluoro-1-propenyl)cyclopropanecarboxylate.

The present compounds are disclosed in, for example, JP 2000-063329 A, JP 2647411 B, JP 57 (1982)-123146 A, JP 2001-011022 A, JP 11 (1999)-222463 A and JP 2002-145828 A, and the present compounds can be prepared according to the processes disclosed therein.

The present compound may have isomers derived from the two asymmetric carbon atoms on the cyclopropane ring and the carbon double bond, and the present invention may include an active isomer thereof in any ratio.

In addition, the present compound used herein may be alone or a mixture of at least two types of the present compounds.

The content of the present compound in the present composition is typically from 0.01 wt% to 5 wt%, preferably from 0.05 wt% to 4 wt%, and more preferably from 0.1 wt% to 3 wt% of the total amount of the present composition.

The glycol ether used herein includes an ethylene glycol ether, and a propylene glycol ether.

The ethylene glycol ether is a glycol ether of the following Formula (2):

R⁴O-[CH₂CH₂O]ₙ-H (2)

wherein R⁴ is methyl group, isopropyl group, butyl group, isobutyl group, hexyl group, 2-ethylhexyl group, allyl group, phenyl group or benzyl group; and n is an integer of 1 to 10. The ethylene glycol ether includes ethylene glycol monomethyl ether, diethylene glycol monomethyl ether, triethylene glycol monomethyl ether, ethylene glycol monoisopropyl ether, diethylene glycol monoisopropyl ether, ethylene glycol monobutyl ether, diethylene glycol monobutyl ether, triethylene glycol monobutyl ether, ethylene glycol monoisobutyl ether, diethylene glycol monoisobutyl ether, and ethylene glycol monoallyl ether.

The propylene glycol ether includes glycol ethers of the following Formula (3):

R⁵O-[CH₂CH(CH3)O]ₘ-H (3)

wherein R⁵ is methyl group, propyl group, butyl group, phenyl group or allyl group; and m is an integer of 1 to 3. The propylene glycol ether includes propylene glycol monomethyl ether, dipropylene glycol monomethyl ether, dipropylene glycol monoethyl ether, tripropylene glycol monomethyl ether, propylene glycol monoethyl ether, propylene glycol monopropyl ether, dipropylene glycol monopropyl ether, propylene glycol monobutyl ether, dipropylene glycol monobutyl ether, and propylene glycol monoallyl ether.

The glycol ether used herein is an ethylene glycol ether and a propylene glycol ether from the viewpoint of stability of the present composition.

Among the ethylene glycol ethers, it is preferable to use ethylene glycol monobutyl ether and diethylene glycol monobutyl ether from the viewpoint of solubility of the present compound with water.

Among the propylene glycol ethers, it is preferable to use propylene glycol monomethyl ether, propylene glycol monoethyl ether and propylene glycol monopropyl ether, and it is more preferable to use propylene glycol monoethyl ether and propylene glycol monopropyl ether from the viewpoint of solubility of the present compound with water.

In addition, the glycol ether used herein may be one or two types of the glycol ethers.

The glycol ether content in the present composition is from 15 wt% to 40 wt% of the total amount of the present composition.

The water content in the present composition is from 20 wt% to 85 wt%, preferably from 40 wt% to 80 wt%, more preferably from 50 wt% to 80 wt%, and even more preferably from 50 wt% to 75 wt% of the total amount of the present composition.

The weight ratio between glycol ether and water (i.e. glycol ether : water) in the present composition is in the range of typically from 1:0.4 to 1:8.5, preferably from 1:1.3 to 1:5.3, and more preferably from 1:1.8 to 1:4.4.

Alternatively, the weight ratio between glycol ether and water in the present composition is in the range of typically from 1:0.4 to 1:8.5, preferably from 1:1 to 1:8.5, and more preferably from 1:1.4 to 1:3.6.

The present composition may further comprise a glycol.

It is preferable that the present composition comprises a glycol because the glycol can keep the solution of the present composition stable and/or each ingredient of the present composition can be mixed more homogeneously.

The glycol used herein includes ethylene glycol, diethylene glycol, triethylene glycol, propylene glycol, 1,3-butylene glycol, polyethylene glycol, polypropylene glycol, tetraethylene glycol, dipropylene glycol, tripropylene glycol, and tetrapropylene glycol.

From the viewpoint of keeping the solution stable and/or mixing each ingredient of the present composition more homogeneously, the glycol used herein is preferably ethylene glycol, diethylene glycol and triethylene glycol, as well as propylene glycol and dipropylene glycol, and more preferably triethylene glycol, propylene glycol and dipropylene glycol. It is preferable that the present composition comprises triethylene glycol as a glycol.

The glycol content in the present composition is typically from 1 wt% to 45 wt%, preferably from 3 wt% to 40 wt%, more preferably from 5 wt% to 30 wt%, and even more preferably from 5 wt% to 20 wt% of the total amount of the present composition.

In addition, the glycol used herein may be one or two types of the glycols. The present composition comprising two types of the glycols includes a composition comprising dipropylene glycol and triethylene glycol, a composition comprising ethylene glycol and triethylene glycol, a composition comprising propylene glycol and triethylene glycol, and a composition comprising dipropylene glycol and tripropylene glycol.

The weight of the glycol used herein is preferably not greater than 400 weight parts relative to 100 weight parts of the glycol ether.

When the present composition comprises at least one compound selected from the group consisting of dipropylene glycol and triethylene glycol, the content ratio of glycol ether, dipropylene glycol (DPG) and triethylene glycol (TEG) (i.e. glycol ether : DPG : TEG) is in the range of preferably 25-35:10:0 to 25-35:0:15, and more preferably 25-35:8:3 to 25-35:1:13.5.

The present composition may comprise the present compound, glycol ether and water, or the present compound, glycol ether, water and glycol. However, as long as the homogeneity of the present composition is maintained and/or each ingredient of the present composition is adequately mixed, the present composition may optionally comprise at least one formulation additive such as a thickening agent, a dispersant [e.g. a surfactant (excluding the above-mentioned glycol ether)], a stabilizing agent, a flavoring, and a preservative.

The thickening agent used herein includes natural polysaccharides such as xanthan gum, rhamsan gum, locust bean gum, carrageenan and welan gum; synthetic polymers such as sodium polyacrylate; semisynthetic polymers such as carboxymethylcellulose; mineral powders such as aluminum magnesium silicate, smectite, bentonite, hectorite and fumed silica; alumina sol; and glycerin.

The surfactant used herein includes non-ionic surfactants, anionic surfactants and amphoteric surfactants, and the non-ionic surfactants are preferable from the viewpoint of safety.

The dispersant used herein includes lignin sulfonate derivatives, naphthalene sulfonate derivatives, and water-soluble synthetic polymers (e.g. polyvinyl alcohol and polyvinylpyrrolidone).

The stabilizing agent used herein includes BHT (2,6-di-t-butyl-4-methylphenol), BHA (a mixture of 2-t-butyl-4-methoxyphenol and 3-t-butyl-4-methoxyphenol), vitamin C and catechin.

The flavoring used herein includes natural flavorings, synthetic flavorings, and extracted flavorings.

The preservative used herein includes benzoic acid, sodium benzoate, methyl parahydroxybenzoate, butyl parahydroxy benzoate, isopropyl methyl phenol, benzalkonium chloride, chlorhexidine hydrochloride, hydrogen peroxide water, chlorhexidine gluconate, salicylic acid, sodium salicylate, zinc pyrithione, sorbic acid, potassium sorbate, dehydroacetic acid, sodium dehydroacetate, phenoxyethanol, isothiazoline derivatives (e.g. 5-chloro-2-methyl-4-isothiazoline-3-one and 2-methyl-4-isothiazoline-3-one), 2-bromo-2-nitropropane-1,3-diol, and salicylate derivatives. Specifically, the preservative used herein includes Biohope L (manufactured by K·I CHEMICAL INDUSTRY CO., LTD) and Proxel GXL (manufactured by AVECIA CO., LTD).

The present composition may further comprise at least one additive agent such as other pesticidal active ingredients, acaricidal active ingredients, repellent active ingredients, and synergists.

The synergists used herein include piperonyl butoxide, sesamex, sulfoxide, N-(2-ethylhexyl)-8,9,10-trinorborn-5-en-2,3-dicarboxyimide (MGK 264), N-declyimidazole, WARF-antiresistant, TBPT, TPP, IBP, PSCP, methyl iodide (CH₃I), t-phenylbutenone, diethylmaleate, DMC, FDMC, ETP, ETN and d-limonene.

The present composition can be used in the form of, for example, a heat transpiratory preparation. Furthermore, the present composition can be applied to sprayers such as an ultrasonic atomizer, an aerosol spray and a pump spray, and a transpiratory preparation from which the present composition spontaneously vaporizes, such as a preparation which comprises an inorganic material, resin or fabrics as a carrier of the composition.

It is especially preferable to use the present composition in the form of a heat transpiratory preparation or in the form of a composition for an ultrasonic atomizer.

Pests which can be controlled by the present composition include arthropods such as insects and mites. Specific examples of the pests are as follows.

*Lepidoptera:* Pyralid moths (*Pyralidae*) such as rice stem borer (*Chilo suppressalis*), rice leafroller (*Cnaphalocrocis medinalis*), and Indian meal moth (*Plodia interpunctella*); armyworms (*Pseudaletia unipuncta*) such as common cutworm (*Spodoptera litura*), rice armyworm (*Pseudaletia separata*), and cabbage armyworm (*Mamestra brassicae*); white butterflies (*Pieridae*) such as cabbage butterfly (*Pieris rapae*); tortricid moths (*Tortricidae*) such as summer fruit tortrix moth (*Adoxophyes orana*); fruitworm moths (*Carposinidae*); lyonetiid moths (*Lyonetiidae*); tussock moths (*Lymantriidae*); *Autographa; Agrotis spp.* such as turnip moth (*Agrotis segetum*) and black cutworm (*Agrotis ipsilon*); *Helicoverpa spp.; Heliothis spp.;* diainondback moths (*Plutella xylostella*); common straight swift (*Parnara guttata*); casemaking clothes moth (*Tinea translucens*); webbing clothes moth (*Tineola bisselliella*); and the like.

*Diptera*: House mosquitos (*Culex*) such as common house mosquito (*Culex pipiens pallens*)*,* small house mosquito (*Culex tritaeniorhynchus*), and tropical house mosquito (*Culex quinquefasciatus*); striped mosquitoes (*Aedes*) such as yellow fever mosquito (Aedes aegypti) and Asian tiger mosquito (Aedes albopictus); anopheles mosquitoes (*Anopheles*) such as Chinese anopheles (*Anopheles sinensis*) and African malaria mosquito (*Anopheles gambiae*) ; chironomids (*Chironomidae*); house flies (*Muscidae*) such as common housefly (*Musca domestica*), false stable fly (*Muscina stabulans*), and lesser housefly (*Fannia canicularis*); blow flies (*Calliphoridae*); flesh flies (*Sarcophagidae*); anthomyiid flies (*Anthomyiidae*) such as seedcorn fly (*Delia platura*) and onion fly (*Delia antiqua*); fruit flies (*Tephritidae*); *Drosophilidae*; sand flies (*Phlebotominae*); humpbacked flies (*Phoridae*); horse flies (*Tabanidae*); black flies (*Simuliidae*); stable flies (*Stomoxyinae*); biting midge (*Ceratopogonid*) ; and the like.

*Dictyoptera:* German cockroach (*Blattella germanica*), smokybrown cockroach (*Periplaneta fuliginosa*), american cockroach (*Periplaneta americana*), Australian cockroach (*Periplaneta australasiae*), brown cockroach (*Periplaneta brunnea*), oriental cockroach (*Blatta orientalis*), and the like.

*Hymenoptera*: Ants (*Formicidae*), bees (*Hymenoptera*) [e.g. Paper wasps (*Polistinae*) such as Asian paper wasp (*Polistes chinensis antennalis*)*, Polistes riparius, Polistes jadwigae jadwigae,* yellow paper wasp (*Polistes rothneyi*), *Polistes mandarinu, Polistes snelleni,* and *Polistes japonicus;* vespid wasps (*Vespoidea*) such as Japanese giant hornet (*Vespa mandarinia*), Japanese yellow hornet (*Vespa simillima xanthoptera*), *Vespa analis,* European hornet (*Vespa crabro*), *Vespa ducalis, Vespula flaviceps, Vespula shidai,* and Median wasp (*Dolichovespula media*); bethylid wasps (Bethylidae); carpenter bee (*Xylocopa*); spider wasp (*Cyphononyx dorsalis*); digger wasp (*Sphecidae*); and mason wasp (*Eumeninae*)], and the like.

*Siphonaptera:* Dog flea (*Ctenocephalides canis*), cat flea (*Ctenocephalides felis*), human flea (*Pulex irritans*), and the like.

*Anoplura:* Human body louse (*Pediculus humanus*), crab louse (*Phthirus pubis*), head louse (*Pediculus humanus humanus*), human clothing louse (*Pediculus humanus corporis*), and the like.

*Isoptera*: Japanese subterranean termite (*Reticulitermes speratus*), Formosan subterranean termite (*Coptotermes formosanus*), and the like.

*Hemiptera:* Planthoppers (*Delphacidae*) such as small brown planthopper (*Laodelphax striatellus*), brown rice planthopper (*Nilaparvata lugens*), and white-backed rice planthopper (*Sogatella furcifera*); leafhoppers (*Deltocephalidae*) such as green rice leafhopper (*Nephotettix cincticeps*) and Taiwan green rice leafhopper (*Nephotettix virescens*); aphids (*Aphididae*); stink bugs (*Pentatomidae*) ; whiteflies (*Aleyrodidae*); scale insects (*Coccoidea*); lace bugs (*Tingidae*); psyllids (*Psyllidae*); bed bugs (*Cimicidae*); and the like.

*Coleoptera:* Black carpet beetle (*Attagenus japonicus*); varied carpet beetle (*Anthrenus verbasci*); corn root worms (*Diabrotica spp*.) such as Western corn root worm (*Diabrotica virgifera virgifera*) and Sourthern corn root worm (*Diabrotica undecimpunctata howardi*); scarabs (*Scarabaeidae*) such as cupreous chafer (*Anomala cuprea*) and soybean beetle (*Anomala rufocuprea*) ; weevils (Curculionidae) such as maize weevil (*Sitophilus zeamais*), rice water weevil (*Lissorhoptrus oryzophilus*), boll weevil (*Anthonomus grandis*), and azuki bean weevil (*Callosobruchus chinensis*); darkling beetles (*Tenebrionidae*) such as yellow mealworm (*Tenebrio molitor*) and red flour beetle (*Tribolium castaneum*); leaf beetles (*Chrysomelidae*) such as rice leaf beetle (*Oulema oryzae*), striped flea beetle (*Phyllotreta striolata*), and cucurbit leaf beetle (*Aulacophora femoralis*); deathwatch beetles (*Anobiidae*); *Epilachna spp.* such as Twenty-eight-spotted ladybird (*Epilachna vigintioctopunctata*); powder post beetles (*Lyctus brunneus*); horned powder-post beetles (*Bostrichidae*) ; longhorn beetles (*Cerambycidae*); rove beetles (*Paederus fuscipes*); and the like.

*Thysanoptera:* Melon thrip (*Thrips parmi*), yellow citrus thrip (*Frankliniella occidentalis*), Hawaiian flower thrip (*Thrips hawaiiensis*), and the like.

*Orthoptera:* Mole cricket (*Gryllotalpa brachyptera*), grasshopper (*Locust*), and the like.

*Acari:* House dust mites (*Pyroglyphidae*) such as American house dust mite (*Dermatophagoides farinae*) and European house dust mite (*Dermatophagoides ptrenyssnus*); acarid mites (*Acaridae*) such as mold mite (*Tyrophagus putrescentiae*) and brown legged grain mite (*Aleuroglyphus ovatus*); *Glycyphagidae* such as *Glycyphagus privatus,* house mite (*Glycyphagus domesticus*), and parasitic mite (*Glycyphagus destructor*); cheyletide mites (*Cheyletidae*) such as *Cheyletus malaccensis* and *Cheyletus fortis;* tarosonemid mites (Tarsonemidae); *Chortoglyphidae; Haplochthonius simplex;* spider mites (*Tetranychidae*) such as two-spotted spider mite (*Tetranychus urticae*), Kanzawa spider mite (*Tetranychus kanzawai*), citrus red mite (*Panonychus citri*), and European red mite (*Panonychus ulmi*); ticks (*Ixodidae*) such as New Zealand cattle tick (*Haemaphysalis longicornis*); and the like.

The method for controlling pests of the present invention is typically carried out by applying the present composition to the pests or habitats thereof.

The methods of applying the present composition are, for example, the following methods, and any of them may be selected depending on factors such as the form of the present composition and the place of application.
(1) A method of using the present composition in the form of a heat transpiratory preparation to fumigate habitats of the pests with the present composition.
(2) A method of using the present composition with sprayers (e.g. an ultrasonic atomizer, an aerosol spray, and a pump spray) to spray the present composition over the pests or habitats thereof.

In any methods, the amount and the concentration of the present compound may be determined depending on factors such as the form of the present composition; the season, place, and method of the application; the types of pests; and the extent of damage.

Among the pest control methods of the present invention, a method of applying the present composition in the form of a heat transpiratory preparation is carried out by, for example, dipping a part of a porous liquid-absorbing wick in the present composition to absorb the composition into the wick, and then heating the upper part, i.e. one end part of the wick to make the absorbed composition can vaporize. The apparatus used herein is known in the technical field, and for example, a pesticidal apparatus for heat transpiratory preparation disclosed in JP 2(1990)-025885 B may be used.

The material of the porous liquid-absorbing wick is, for example, inorganic powders (e.g. clay, talc, kaolin, diatomaceous earth, gypsum, perlite, bentonite, acid clay, glass fiber, and asbestos) which are shaped by binding with pastes (e.g. carboxymethylcellulose, starch, gum arabic, gelatin, and polyvinyl alcohol); inorganic substances (e.g. clay, talc, bentonite, alumina, and silica) which are fixed to form a wick and then burnt; resins which are shaped/modified to form a wick; and glass fibers or the like which are tied together.

Among the pest control methods of the present invention, a method of applying the present composition with an ultrasonic atomizer is carried out by, for example, spraying the present composition from the ultrasonic atomizer. In this case, the present composition is atomized by ultrasound and then sprayed. In addition, an ultrasonic atomizer disclosed in, for example, JP 2009-118792 A may be used herein.

Among the pest control methods of the present invention, a method of applying the present composition with an aerosol is carried out by, for example, loading an aerosol container with the present composition, attaching an aerosol valve to the container, loading the container with a propellant by a stem, shaking the container, attaching an actuator to the container to prepare an aerosol, and then spraying the composition from the aerosol. In addition, the propellant used herein includes nitrogen gas, compressed air, carbon dioxide gas, liquefied petroleum gas (LPG) and dimethyl ether. The actuator used herein includes button-type actuator and trigger-type actuator.

Among the pest control methods of the present invention, a method of applying the present composition with a pump spray is carried out by, for example, loading a pump spray (which does not require a propellant, i.e. which works by pumping action) with the present composition, and then spraying the composition from the pump spray. In addition, the pump spray used herein is known in the technical field, and for example, a pump spray disclosed in JP 8 (1996)-295359 A and a trigger-type pump spray disclosed in JP 2002-233798 A may be used.

### Example

The present inventions are illustrated in more detail in the following examples such as Formulation Examples and Test Examples, but the present inventions should not be construed to be limited thereto.

Hereinafter, Formulation Examples of the present compositions are illustrated, in which "parts" denotes "parts by weight".

In Formulation Examples, Compound A, Compound B and Compound C were as follows.
Compound A: [2,3,5,6-tetrafluoro-4-(methoxymethyl)-phenyl]methyl (*1R*)-*trans*-2,2-dimethyl-3-((Z)-1-propenyl)-cyclopropane-carboxylate
Compound B: [2,3,5,6-tetrafluoro-4-methylphenyl]methyl (*1R*)-*trans*-2,2-dimethyl-3-((Z)-1-propenyl)cyclopropanecarboxylate
Compound C: (2,3,5,6-tetrafluorophenyl)methyl (*1R*) - *trans*-3-(2,2-dichlorovinyl)-2,2-dimethylcyclopropanecarboxylate

### Formulation Example 1

0.15 Part of Compound A, 70 parts of water and 29.85 parts of ethylene glycol monobutyl ether were mixed, and the mixture was stirred to obtain 100 parts of a liquid composition [hereinafter, referred to as Composition (1)].

### Formulation Example 2

0.15 Part of Compound A, 70 parts of water and 29.85 parts of diethylene glycol monobutyl ether were mixed, and the mixture was stirred to obtain 100 parts of a liquid composition [hereinafter, referred to as Composition (2)].

### Formulation Example 3

0.15 Part of Compound B, 70 parts of water and 29.85 parts of diethylene glycol monobutyl ether were mixed, and the mixture was stirred to obtain 100 parts of a liquid composition [hereinafter, referred to as Composition (3)].

### Formulation Example 4

0.15 Part of Compound C, 70 parts of water and 29.85 parts of diethylene glycol monobutyl ether were mixed, and the mixture was stirred to obtain 100 parts of a liquid composition [hereinafter, referred to as Composition (4)].

### Formulation Example 5

0.15 Part of Compound A, 65 parts of water and 34.85 parts of ethylene glycol monobutyl ether were mixed, and the mixture was stirred to obtain 100 parts of a liquid composition [hereinafter, referred to as Composition (5)].

### Formulation Example 6

1.2 Parts of Compound B, 65 parts of water and 33.8 parts of ethylene glycol monobutyl ether were mixed, and the mixture was stirred to obtain 100 parts of a liquid composition [hereinafter, referred to as Composition (6)].

### Formulation Example 7

0.6 Part of Compound C, 65 parts of water and 34.4 parts of ethylene glycol monobutyl ether were mixed, and the mixture was stirred to obtain 100 parts of a liquid composition [hereinafter, referred to as Composition (7)].

### Formulation Example 8

0.2 Part of Compound A, 70 parts of water, 19.8 parts of ethylene glycol monobutyl ether and 10 parts of triethylene glycol were mixed, and the mixture was stirred to obtain 100 parts of a liquid composition [hereinafter, referred to as Composition (8)].

### Formulation Example 9

0.2 Part of Compound A, 50 parts of water, 39.8 parts of propylene glycol monoethyl ether and 10 parts of triethylene glycol were mixed, and the mixture was stirred to obtain 100 parts of a liquid composition [hereinafter, referred to as Composition (9)].

### Formulation Example 10

0.2 Part of Compound A, 60 parts of water, 29.8 parts of propylene glycol monopropyl ether and 10 parts of propylene glycol were mixed, and the mixture was stirred to obtain 100 parts of a liquid composition [hereinafter, referred to as Composition (10)].

### Formulation Example 11

0.2 Part of Compound A, 60 parts of water, 29.8 parts of propylene glycol monopropyl ether and 10 parts of dipropylene glycol were mixed, and the mixture was stirred to obtain 100 parts of a liquid composition [hereinafter, referred to as Composition (11)].

### Formulation Example 12

0.2 Part of Compound A, 55 parts of water, 29.8 parts of propylene glycol monopropyl ether and 15 parts of triethylene glycol were mixed, and the mixture was stirred to obtain 100 parts of a liquid composition [hereinafter, referred to as Composition (12)].

### Formulation Example 13

0.2 Part of Compound A, 57.5 parts of water, 29.8 parts of propylene glycol monopropyl ether, 5 parts of dipropylene glycol and 7.5 parts of triethylene glycol were mixed, and the mixture was stirred to obtain 100 parts of a liquid composition [hereinafter, referred to as Composition (13)].

### Formulation Example 14

0.2 Part of Compound A, 56 parts of water, 29.8 parts of propylene glycol monopropyl ether, 2 parts of dipropylene glycol and 12 parts of triethylene glycol were mixed, and the mixture was stirred to obtain 100 parts of a liquid composition [hereinafter, referred to as Composition (14)].

### Formulation Example 15

Any of Compositions (1) to (14) (60 g) are put into an aerosol can. After attaching an aerosol valve to the aerosol can, the aerosol can is charged with nitrogen gas (40 g) and shaken. Then, an actuator is attached to the aerosol can to obtain Aerosol Formulation 1.

### Formulation Example 16

Any of Compositions (1) to (14) (60 g) are put into an aerosol can. After attaching an aerosol valve to the aerosol can, the aerosol can is charged with dimethyl ether (40 g) and shaken. Then, an actuator is attached to the aerosol can to obtain Aerosol Formulation 2.

### Formulation Example 17

A chemical bottle (10 mL), which has been charged with Composition (1), is attached to an ultrasonic atomizer (SCENTS RISER manufactured by NIPPON MMI TECHNOLOGY) to obtain an ultrasonic atomizer for controlling pests.

### Formulation Example 18

A plastic bottle is charged with the present composition and then a pump spray head is attached to the bottle to obtain a pump spray.

### Comparative Formulation Example 1

0.15 Part of Compound A, 90 parts of water and 9.85 parts of ethylene glycol monobutyl ether were mixed, and the mixture was stirred to obtain 100 parts of a liquid composition [hereinafter, referred to as Comparative Composition (1)].

Hereinafter, Test Examples are illustrated. Compound A, Compound B and Compound C used herein were as follows.
Compound A: [2,3,5,6-tetrafluoro-4-(methoxymethyl)-phenyl]methyl (*1R*)-*trans*-2,2-dimethyl-3-((*Z*)-1-propenyl)-cyclopropane-carboxylate
Compound B: [2,3,5,6-tetrafluoro-4-methylphenyl]methyl (*1R*)-*trans*-2,2-dimethyl-3-((*Z*)-1-propenyl)cyclopropanecarboxylate
Compound C: (2,3,5,6-tetrafluorophenyl)methyl (*1R*)-trans-3-(2,2-dichlorovinyl)-2,2-dimethylcyclopropanecarboxylate

### Test Example 1

Composition (1) (40 g) obtained in Formulation Example 1 was put into a container, and a liquid-absorbing wick was attached to the container to prepare a liquid-absorbing wick-attached bottle containing Composition (1). The wick of bottle was heated at 130°C with a pesticidal apparatus for heat transpiratory preparation. The heating procedure was carried out by continuously heating for 8 hours, stopping the heating for 16 hours and then continuously heating for 8 hours again, and this procedure was repeated. The vaporized amount of the present compound was measured for one hour after the beginning of the heating procedure, on the 1st, 7th and 15th days. Using Compositions (2), (3) and (4) instead of Composition (1), the same test was done to measure the vaporized amount of the present compound in each case.

In addition, the vaporized amount of the present compound was calculated by sequentially collecting the vaporized present compound with a glass column filled with a polyurethane sponge as an adsorbent, and then extracting the polyurethane sponge with acetone to analyze the amount of the present compound on chromatograph.

The results are shown in Table 1.

**Table 1**

| | The amount of the present compound vaporized for one hour (mg) | | |
|---|---|---|---|
| | Day 1 | Day 7 | Day 15 |
| Composition (1) | 0.15 | 0.25 | 0.18 |
| Composition (2) | 0.18 | 0.17 | 0.13 |
| Composition (3) | 0.15 | 0.16 | 0.18 |
| Composition (4) | 0.14 | 0.14 | 0.13 |

The present composition can make the present compound continuously vaporized for a long period, thus the present composition can exhibit a continuous pest-controlling effect for a long period.

### Test Example 1-1

Using Composition (8) instead of Composition (1), the same test as Test Example 1 was done to measure the vaporized amount of the present compound on the 1st, 14th and 29th days after the beginning of the heating procedure.

As a result, the vaporized amounts of the present compound on the 1st, 14th and 29th days after the beginning of the heating procedure were 0.16 mg, 0.11 mg and 0.11 mg respectively.

### Test Examples 1-2 to 1-6

Using Compositions (9) to (14) instead of Composition (8), the same tests as Test Example 1-1 were done to measure the vaporized amount of the present compound in each case. The vaporized amounts in each case were measured on not exactly the same days as Test Example 1-1.

The results (including Test Example 1-1) are shown in Table 1-2.

**Table 1-2**

| Composition No. | The amount of the present compound vaporized for one hour (mg) | | | | | | | | | |
|---|---|---|---|---|---|---|---|---|---|---|
| | Day 1 | Day 6 | Day 7 | Day 12 | Day 14 | Day 15 | Day 18 | Day 26 | Day 28 | Day 29 |
| (8) | 0.16 | | | | 0.11 | | | | | 0.11 |
| (9) | 0.13 | | | | | | 0.13 | | | 0.13 |
| (10) | 0.22 | | 0.22 | | | 0.11 | | | | |
| (11) | 0.14 | | 0.13 | | | 0.12 | | | | |
| (12) | 0.11 | | | 0.12 | | | | 0.11 | | |
| (13) | 0.20 | | | | | 0.18 | | 0.12 | | |
| (14) | | 0.12 | | | 0.14 | | | | 0.15 | |

### Test Example 2

Composition (5) (40 g) was put into a container, and a liquid-absorbing wick was attached to the container to prepare a Composition (5)-containing bottle with a liquid-absorbing wick. The bottle was heated at 130°C for 4 hours with a pesticidal apparatus for heat transpiratory preparation, and then the heating was stopped. The bottle-attached pesticidal apparatus for heat transpiratory preparation was placed in the center of the testing room (rectangular parallelepiped of 3.0 m x 4.0 m x 2.3 m, 28 m³) and was heated again, and then about 100 common house mosquitoes (*Culex pipiens pallens*) (female adult) were released in the room immediately. After a while, the knocked-down insects were counted, and based on such data, KT50 (time required for knocking-down 50 % of the testing insects) was calculated. Using Composition (6), Composition (7) and Comparative Composition (1) instead of Composition (5), the same test was done to calculate KT50 in each case.

The results are shown in Table 2.

**Table 2**

| | KT50 (min) |
|---|---|
| Composition (5) | 18.1 |
| Composition (6) | 19.8 |
| Composition (7) | 18.4 |
| Comparative Composition (1) | >60 |

### Test Example 2-1

Composition (8) (35 g) was put into a container, and a liquid-absorbing wick was attached to the container to prepare a Composition (8)-containing bottle with a liquid-absorbing wick. The bottle was heated at 130°C for 20 hours with a pesticidal apparatus for heat transpiratory preparation, and then the heating was stopped. The bottle-attached pesticidal apparatus for heat transpiratory preparation was placed in the center of the testing room (rectangular parallelepiped of 3.0 m x 4.0 m x 2.3 m, 28 m³) and was heated again, and then about 100 common house mosquitoes (*Culex pipiens pallens*) (female adult) were released in the room immediately. 60 Minutes after the release, the number of knocked-down insects was counted to calculate the knocking-down rate (KD rate) after 60 minutes.

Using Composition (9), Composition (14) and Comparative Composition (1) instead of Composition (8), the same test was done to calculate the knocking-down rate after 60 minutes in each case.

The results are shown in Table 2-1.

**Table 2-1**

| | KD rate after 60 minutes (%) |
|---|---|
| Composition (8) | 62 |
| Composition (9) | 90 |
| Composition (14) | 80 |
| Comparative Composition (1) | 2 |

### Industrial Applicability

The present composition has an excellent efficacy in controlling pests.

## Claims

1. A pesticidal composition comprising an ester compound of Formula (1): 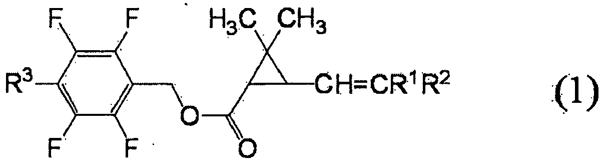 wherein R¹ and R² are each independently selected from the group consisting of hydrogen atom, methyl group, trifluoromethyl group and chlorine atom; and R³ is hydrogen atom, methyl group or methoxymethyl group,
a glycol ether selected from the group consisting of an ethylene glycol ether of Formula (2):
R⁴O-[CH₂CH₂O]ₙ-H (2)
wherein R⁴ is methyl group, isopropyl group, butyl group, isobutyl group, hexyl group, 2-ethylhexyl group, allyl group, phenyl group or benzyl group; and n is an integer of 1 to 10; and a propylene glycol ether,
and water
wherein the glycol ether content is from 15 wt% to 40 wt% of the total amount of the composition and the water content is from 20 wt% to 85 wt% of the total amount of the composition.

2. The pesticidal composition of claim 1 wherein the glycol ether is one or two compounds selected from the group consisting of ethylene glycol monobutyl ether and diethylene glycol monobutyl ether.

3. The pesticidal composition of claim 1 wherein the glycol ether is at least one compound selected from the group consisting of ethylene glycol monobutyl ether, diethylene glycol monobutyl ether, propylene glycol monomethyl ether, propylene glycol monoethyl ether, and propylene glycol monopropyl ether.

4. The pesticidal composition of any one of claims 1 to 3 wherein the ester compound of Formula (1) is at least one compound selected from the group consisting of:
[2,3,5,6-tetrafluoro-4-(methoxymethyl)phenyl]methyl 2,2-dimethyl-3-(1-propenyl)cyclopropane-carboxylate,
[2,3,5,6-tetrafluoro-4-methylphenyl]methyl 2,2-dimethyl-3-(1-propenyl)cyclopropane-carboxylate,
(2,3,5,6-tetrafluorophenyl)methyl 3-(2,2-dichlorovinyl)-2,2-dimethylcyclopropane-carboxylate,
[2,3,5,6-tetrafluoro-4-(methoxymethyl)phenyl]methyl 3-(2,2-dichlorovinyl)-2,2-dimethylcyclopropane-carboxylate,
[2,3,5,6-tetrafluoro-4-(methoxymethyl)phenyl]methyl 2,2-dimethyl-3-(2-methyl-1-propenyl)cyclopropanecarboxylate, and
[2,3,5,6-tetrafluoro-4-(methoxymethyl)phenyl]methyl 3-(3,3,3-trifluoro-1-propenyl)-2,2-dimethylcyclopropanecarboxylate.

5. The pesticidal composition of any one of claims 1 to 4 wherein the water content is from 50 wt% to 80 wt% of the total amount of the composition.

6. The pesticidal composition of any one of claims 1 to 5 which further comprises a glycol.

7. The pesticidal composition of claim 6 wherein the glycol is at least one compound selected from the group consisting of ethylene glycol, diethylene glycol, triethylene glycol, propylene glycol, 1,3-butylene glycol, polyethylene glycol and polypropylene glycol.

8. The pesticidal composition of claim 6 wherein the glycol is at least one compound selected from the group consisting of ethylene glycol, diethylene glycol, triethylene glycol, propylene glycol, 1,3-butylene glycol, polyethylene glycol, polypropylene glycol, dipropylene glycol, tripropylene glycol, and tetraethylene glycol.

9. The pesticidal composition of any one of claims 6 to 8 wherein the glycol is triethylene glycol.

10. The pesticidal composition of any one of claims 6 to 8 wherein the glycol is at least one compound selected from the group consisting of triethylene glycol, propylene glycol and dipropylene glycol.

11. The pesticidal composition of any one of claims 6 to 10 wherein the glycol content is from 1 wt% to 45 wt% of the total amount of the composition.

12. A non-therapeutic
method for controlling pests which comprises applying an effective amount of the pesticidal composition of any one of claims 1 to 11 to pests or habitats thereof.

13. The method of claim 12 which is carried out by dipping a part of a porous liquid-absorbing wick in the pesticidal composition of any one of claims 1 to 11 to absorb the composition into the wick, and then heating the upper part of the wick to make the absorbed composition vaporize.

14. The method of claim 12 which is carried out by spraying the pesticidal composition of any one of claims 1 to 11 from an ultrasonic atomizer.

## Patentansprüche

1. Eine Pestizidzusammensetzung, umfassend eine Esterverbindung der Formel (1): 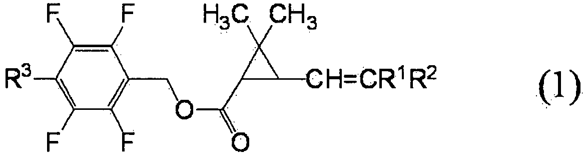 wobei R¹ und R² jeweils unabhängig ausgewählt sind aus der Gruppe bestehend aus Wasserstoffatom, Methylgruppe, Trifluormethylgruppe und Chloratom; und R³ Wasserstoffatom, Methylgruppe oder Methoxymethylgruppe ist,
einen Glycolether, ausgewählt aus der Gruppe bestehend aus einem Ethylenglycolether der Formel (2):
R⁴O-[CH₂CH₂O]ₙ-H (2)
wobei R⁴ Methylgruppe, Isopropylgruppe, Butylgruppe, Isobutylgruppe, Hexylgruppe, 2-Ethylhexylgruppe, Allylgruppe, Phenylgruppe oder Benzylgruppe ist; und n eine ganze Zahl von 1 bis 10 bedeutet; und einen Propylenglycolether,
und Wasser
wobei der Gehalt an Glycolether 15 Gew.-% bis 40 Gew.-% der Gesamtmenge der Zusammensetzung beträgt und der Wassergehalt 20 Gew.-% bis 85 Gew.-% der Gesamtmenge der Zusammensetzung beträgt.

2. Die Pestizidzusammensetzung gemäß Anspruch 1, wobei der Glycolether eine oder zwei Verbindungen, ausgewählt aus der Gruppe bestehend aus Ethylenglycolmonobutylether und Diethylenglycolmonobutylether, ist.

3. Die Pestizidzusammensetzung gemäß Anspruch 1, wobei der Glycolether mindestens eine Verbindung, ausgewählt aus der Gruppe bestehend aus Ethylenglycolmonobutylether, Diethylenglycolmonobutylether, Propylenglycolmonomethylether, Propylenglycolmonoethylether und Propylenglycolmonopropylether, ist.

4. Die Pestizidzusammensetzung gemäß einem der Ansprüche 1 bis 3, wobei die Esterverbindung der Formel (1) mindestens eine Verbindung ist, ausgewählt aus der Gruppe bestehend aus:
[2,3,5,6-Tetrafluor-4-(methoxymethyl)phenyl]methyl-2,2-dimethyl-3-(1-propenyl)cyclopropan-carboxylat,
[2,3,5,6-Tetrafluor-4-methylphenyl]methyl-2,2-dimethyl-3-(1-propenyl)cyclopropan-carboxylat,
(2,3,5,6-Tetrafluorphenyl)methyl-3-(2,2-dichlorvinyl)-2,2-dimethylcyclopropan-carboxylat,
[2,3,5,6-Tetrafluor-4-(methoxymethyl)phenyl]methyl-3-(2,2-dichlorvinyl)-2,2-dimethylcyclopropan-carboxylat,
[2,3,5,6-Tetrafluor-4-(methoxymethyl)phenyl]methyl-2,2-dimethyl-3-(2-methyl-1-propenyl)cyclopropan-carboxylat und
[2,3,5,6-Tetrafluor-4-(methoxymethyl)phenyl]methyl-3-(3,3,3-trifluor-1-propenyl)-2,2-dimethylcyclopropan-carboxylat.

5. Die Pestizidzusammensetzung gemäß einem der Ansprüche 1 bis 4, wobei der Wassergehalt 50 Gew.-% bis 80 Gew.-% der Gesamtmenge der Zusammensetzung beträgt.

6. Die Pestizidzusammensetzung gemäß einem der Ansprüche 1 bis 5, welche ferner ein Glycol umfasst.

7. Die Pestizidzusammensetzung gemäß Anspruch 6, wobei das Glycol mindestens eine Verbindung, ausgewählt aus der Gruppe bestehend aus Ethylenglycol, Diethylenglycol, Triethylenglycol, Propylenglycol, 1,3-Butylenglycol, Polyethylenglycol und Polypropylenglycol, ist.

8. Die Pestizidzusammensetzung gemäß Anspruch 6, wobei das Glycol mindestens eine Verbindung, ausgewählt aus der Gruppe bestehend aus Ethylenglycol, Diethylenglycol, Triethylenglycol, Propylenglycol, 1,3-Butylenglycol, Polyethylenglycol, Polypropylenglycol, Dipropylenglycol, Tripropylenglycol und Tetraethylenglycol, ist.

9. Die Pestizidzusammensetzung gemäß einem der Ansprüche 6 bis 8, wobei das Glycol Triethylenglycol ist.

10. Die Pestizidzusammensetzung gemäß einem der Ansprüche 6 bis 8, wobei das Glycol mindestens eine Verbindung, ausgewählt aus der Gruppe bestehend aus Triethylenglycol, Propylenglycol und Dipropylenglycol, ist.

11. Die Pestizidzusammensetzung gemäß einem der Ansprüche 6 bis 10, wobei der Glycolgehalt 1 Gew.-% bis 45 Gew.-% der Gesamtmenge der Zusammensetzung beträgt.

12. Ein nicht-therapeutisches Verfahren zur Bekämpfung von Schädlingen, welches das Aufbringen einer wirksamen Menge der Pestizidzusammensetzung gemäß einem der Ansprüche 1 bis 11 auf die Schädlinge oder deren Lebensräume umfasst.

13. Das Verfahren gemäß Anspruch 12, welches durchgeführt wird, indem ein Teil eines porösen, flüssigkeitsabsorbierenden Dochts in die Pestizidzusammensetzung gemäß einem der Ansprüche 1 bis 11 getaucht wird, um die Zusammensetzung in den Docht zu absorbieren und anschließend der obere Teil des Dochts erwärmt wird, um die absorbierte Zusammensetzung zu verdampfen.

14. Das Verfahren gemäß Anspruch 12, welches durchgeführt wird, indem die Pestizidzusammensetzung gemäß einem der Ansprüche 1 bis 11 aus einem Ultraschallzerstäuber gesprüht wird.

## Revendications

1. Composition pesticide comprenant un composé d'ester de formule (1): 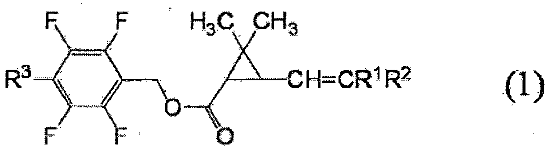 où R¹ et R² sont chacun indépendamment choisis dans le groupe constitué d'un atome d'hydrogène, d'un groupe méthyle, d'un groupe trifluorométhyle et d'un atome de chlore; et R³ est un atome d'hydrogène, un groupe méthyle ou un groupe méthoxyméthyle,
un glycol éther choisi dans le groupe constitué d'un éthylène glycol éther de formule (2):
R₄O-[CH₂CH₂O]ₙ-H (2)
où R⁴ est un groupe méthyle, un groupe isopropyle, un groupe butyle, un groupe isobutyle, un groupe hexyle, un groupe 2-éthylhexyle, un groupe allyle, un groupe phényle ou un groupe benzyle; et n est un nombre entier de 1 à 10; et d'un propylène glycol éther,
et de l'eau
dans laquelle la teneur en glycol éther est de 15 % en masse à 40 % en masse de la quantité totale de la composition et la teneur en eau est de 20 % en masse à 85 % en masse de la quantité totale de la composition.

2. Composition pesticide selon la revendication 1, dans laquelle le glycol éther est un ou deux composés choisis dans le groupe constitué de monobutyléther d'éthylène glycol et de monobutyléther de diéthylène glycol.

3. Composition pesticide selon la revendication 1, dans laquelle le glycol éther est au moins un composé choisi dans le groupe constitué de monobutyléther d'éthylène glycol, monobutyléther de diéthylène glycol, monométhyléther de propylène glycol, monoéthyléther de propylène glycol, et monopropyléther de propylène glycol.

4. Composition pesticide selon l'une quelconque des revendications 1 à 3, dans laquelle le composé d'ester de la formule (1) est au moins un composé choisi dans le groupe constitué de:
2,2-diméthyl-3-(1-propényl)cyclopropane-carboxylate de [2,3,5,6-tétrafluoro-4-(méthoxyméthyl)phényl]méthyle,
2,2-diméthyl-3-(1-propényl)cyclopropane-carboxylate de [2,3,5,6-tétrafluoro-4-méthylphényl]méthyle,
3-(2,2-dichlorovinyl)-2,2-diméthylcyclopropane-carboxylate de (2,3,5,6-tétrafluorophényl)méthyle,
3-(2,2-dichlorovinyl)-2,2-diméthylcyclopropane-carboxylate de [2,3,5,6-tétrafluoro-4-(méthoxyméthyl)phényl]méthyle,
2,2-diméthyl-3-(2-méthyl-1-propényl)cyclopropane-carboxylate de [2,3,5,6-tétrafluoro-4-(méthoxyméthyl)phényl]méthyle, et
3-(3,3,3-trifluoro-1-propényl)-2,2-diméthylcyclopropane-carboxylate de [2,3,5,6-tétrafluoro-4-(méthoxyméthyl)phényl]méthyle.

5. Composition pesticide selon l'une quelconque des revendications 1 à 4, dans laquelle la teneur en eau est de 50 % en masse à 80 % en masse de la quantité totale de la composition.

6. Composition pesticide selon l'une quelconque des revendications 1 à 5 qui comprend de plus un glycol.

7. Composition pesticide selon la revendication 6, dans laquelle le glycol est au moins un composé choisi dans le groupe constitué d'éthylène glycol, diéthylène glycol, triéthylène glycol, propylène glycol, 1,3-butylène glycol, polyéthylène glycol et polypropylène glycol.

8. Composition pesticide selon la revendication 6, dans laquelle le glycol est au moins un composé choisi dans le groupe constitué d'éthylène glycol, diéthylène glycol, triéthylène glycol, propylène glycol, 1,3-butylène glycol, polyéthylène glycol, polypropylène glycol, dipropylène glycol, tripropylène glycol, et tétraéthylène glycol.

9. Composition pesticide selon l'une quelconque des revendications 6 à 8, dans laquelle le glycol est le triéthylène glycol.

10. Composition pesticide selon l'une quelconque des revendications 6 à 8, dans laquelle le glycol est au moins un composé choisi dans le groupe constitué de triéthylène glycol, propylène glycol et dipropylène glycol.

11. Composition pesticide selon l'une quelconque des revendications 6 à 10, dans laquelle la teneur en glycol est de 1 % en masse à 45 % en masse de la quantité totale de la composition.

12. Procédé non thérapeutique pour le contrôle de parasites qui comprend l'application d'une quantité efficace de la composition pesticide selon l'une quelconque des revendications 1 à 11 à des parasites ou à des habitats de ceux-ci.

13. Procédé selon la revendication 12, lequel est réalisé par immersion d'une partie d'une mèche poreuse absorbant du liquide dans la composition pesticide selon l'une quelconque des revendications 1 à 11 pour absorber la composition dans la mèche, et le chauffage subséquent de la partie supérieure de la mèche pour faire en sorte que la composition absorbée se vaporise.

14. Procédé selon la revendication 12, lequel est réalisé par pulvérisation de la composition pesticide selon l'une quelconque des revendications 1 à 11 à partir d'un atomiseur ultrasonique.
